# EUROPEAN PATENT SPECIFICATION

(11) **EP 4 447 036 B1**
(45) Date of publication and mention of the grant of the patent: **24.09.2025**
(21) Application number: 24169431.4
(22) Date of filing: 10.04.2024
(51) Int. Cl.: G10D 1/08, G10D 3/06, G10D 3/22

(54) **NECK FOR A MUSICAL INSTRUMENT AND A METHOD FOR MANUFACTURING A FRETBOARD FOR A NECK FOR A MUSICAL INSTRUMENT**
HALS FÜR EIN MUSIKINSTRUMENT UND VERFAHREN ZUR HERSTELLUNG EINES GRIFFBRETTS FÜR EINEN HALS FÜR EIN MUSIKINSTRUMENT
MANCHE POUR INSTRUMENT DE MUSIQUE ET PROCÉDÉ DE FABRICATION D'UNE TOUCHE POUR UN MANCHE D'INSTRUMENT DE MUSIQUE

(30) Priority: 12.04.2023 FI 20235414
(43) Date of publication of application: 16.10.2024
(73) Proprietor: Flaxwood Oy, 82660 Uusi-Värtsilä (FI)
(72) Inventor: Koivurova, Heikki, 82660 Uusi-Värtsilä (FI); Räty, Mika, 82660 Uusi-Värtsilä (FI); Welch, Roderick, 82660 Uusi-Värtsilä (FI)
(74) Representative: Kolster Oy Ab

(56) References cited:
- US-A- 4 633 754
- US-A- 5 072 643
- US-A1- 2019 333 483

## Description

### BACKGROUND OF THE INVENTION

### FIELD OF THE INVENTION

This invention relates to a neck for a musical instrument, particularly a musical string instrument, and to a method for manufacturing a fretboard for a neck of a musical instrument.

### DESCRIPTION OF PRIOR ART

Musical instruments are high precision instruments that need to produce a certain sound quality to be qualified for use. Particularly, the construction of necks of musical string instruments plays a major part in making up the sound of the instrument. The neck connects the body of the instrument where one end of the strings is anchored, to the headstock of the instrument where the second end of the strings is anchored. The distance between said anchor points regulates the sounding length of the string. When the string is pressed against the neck, a new anchor point is created dividing the string into two vibrating parts and thus effectively changing the sounding length of the string. Most necks have frets in order to aid the user to determine correct finger positions for the correct notes. The frets make it easier for a player to achieve an acceptable standard of intonation while playing the instrument, thus affecting the playability of the instrument. The positioning of the frets is crucial in achieving the correct tone, and the position must be within 0.05 mm of the correct position, or the instrument is rendered unusable.

Most often the necks of musical string instruments such as violins and guitars, are solid necks made of wood. Wood is an excellent material in terms of sound engineering because wood is extremely stiff material in respect of its weight, and its vibrating properties generally please the human ear. The length of tone is suitably short while wood suitably dampens the vibration. However, there are significant disadvantages with the known wooden necks. Wood is laborious and relatively slow to work with to achieve the exact shape and degree of finishing (for example desired coarseness of the surface) required. Particularly, forming the fret slots on wooden necks requires that the fret slots must first be sawed in exact positions and then be finished with special files to achieve a satisfactory end result. These precise results are difficult to achieve with wood due to humidity and temperature related expansion and shrinkage. In addition, no matter how thoroughly the manufacturing is done, inconvenient influence of pores, possible resin pockets, ingrain structure, and other invisible unevenness on the surface of wood often appear only while testing the finished instrument.

The problems with wooden necks have been tried to be solved with polymers mimicking wood. However, in known solutions the necks still require same manufacturing steps where the fret slots are sawed and finished before the frets can be applied. Use of plastics poses a further problem as the matrix plastics used in natural fiber composites are inclined to fracturing, i.e. that the microfractures created in the sawing process keep developing over time, resulting in the neck breaking eventually. This flaw is particularly awkward, as the product is already purchased by the user when the breaking occurs, and the flaw is difficult to notice in quality control beforehand.

Sawing of the fret slots also poses a serious health threat as in the wood types used in fretboards, the sawdust is carcinogenic and may cause asbestosis if inhaled. Therefore, expensive protective gear such as respirators and high-power vacuums must be used in the workstation, thus increasing the costs of the production. Similarly, also sawing of polymers poses a health risk as polymers are prone to melting caused by friction, which in turn may cause the neck to jam the saw, sending the neck flying across the room and potentially seriously harming the workers.

One previously known neck for a musical instrument is disclosed in US5072643A1, wherein a synthetic hollow neck made from synthetic resin is described.

Therefore, there exists a clear need for an improved neck for a musical string instrument. Also, manufacturing processes of necks for musical instruments are lacking in many aspects.

### SUMMARY OF THE INVENTION

An object of the present invention is to solve the above-mentioned disadvantages and to provide a neck for a musical instrument which has excellent properties during use and is easy to manufacture reliably. These and other objects are achieved with a neck according to independent claim 1 and with a manufacturing method according to independent claim 12.

Preferred embodiments of the invention are disclosed in the dependent claims.

Further advantages and details of the invention are disclosed in detail in the description below.

### BRIEF DESCRIPTION OF DRAWINGS

In the following the present invention will be described in closer detail by way of example and with reference to the attached drawings, in which
figure 1A illustrates a perspective view of a section of a first embodiment of the invention,
figure 1B illustrates a cross section of figure 1A,
figure 2A illustrates a perspective view of a section of a second embodiment of the invention,
figure 2B illustrates a cross section of figure 2A,
figure 3A illustrates a perspective view of a section of a third embodiment of the invention,
figure 3B illustrates a cross section of figure 3A,
figure 4 illustrates a perspective view of an embodiment of a fretboard,
figure 5 illustrates a cross-sectional side view of an embodiment of a fretboard,
figure 6 illustrates an exploded view of a section of an embodiment of a mold for a fretboard, and
figure 7 illustrates a flowchart of an example method for manufacturing a fretboard for a neck of a musical instrument.

### DESCRIPTION OF AT LEAST ONE EMBODIMENT

The following embodiments are only examples. Although the specification may refer to "an" embodiment in several locations, this does not necessarily mean that each such reference is to the same embodiment(s), or that the feature only applies to a single embodiment. Furthermore, words "comprising" and "including" should be understood as not limiting the described embodiments to consist of only those features that have been mentioned and such embodiments may contain also features/structures that have not been specifically mentioned.

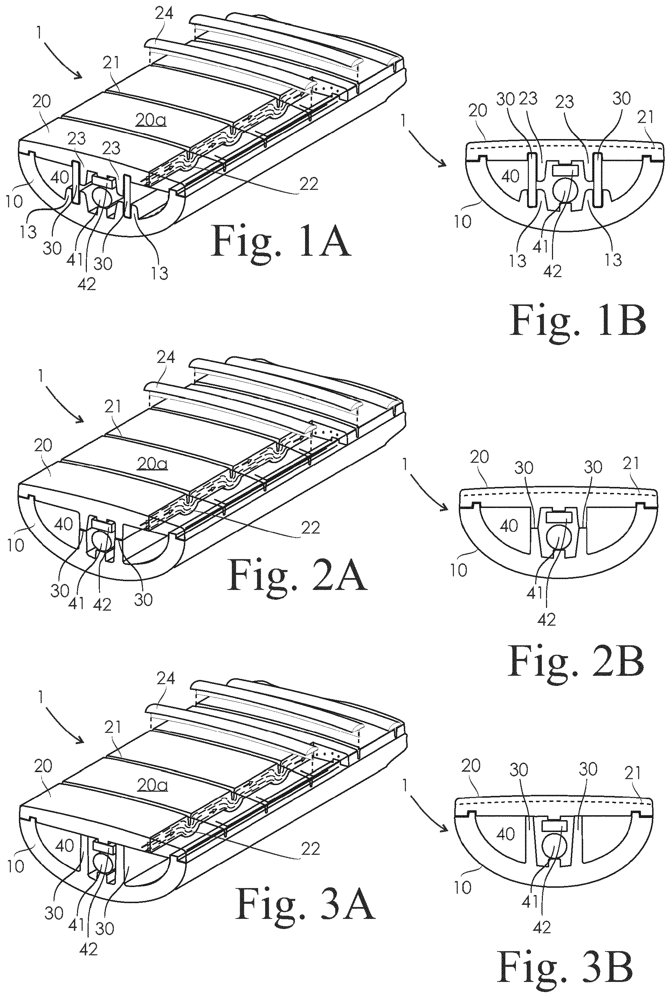

Figures 1A to 3B illustrate embodiments of a neck 1 for a musical instrument. The neck 1 comprising: a neck body 10; a fretboard 20 attached to the neck body 10, such that the neck body 10 and the fretboard 20 delimit a space 40, the fretboard 20 comprising a plurality of lateral fret slots 21 on a first side 20a of the fretboard 20; and elongated support bars 30 arranged between the neck body 10 and the fretboard 20, the support bars 30 are oriented to run in a longitudinal direction of the neck of the musical instrument 1. The fretboard 20 further comprises a plurality of lateral reinforcing tabs 22 on a second side 20b of the fretboard 20 such that the reinforcing tabs 22 are located below the fret slots 21. This hollow configuration enables a lighter neck 1 construction without weakening the structural integrity of the neck 1 and longevity of the instrument. The hollow construction also acts as a resonator for the string vibrations thus amplifying the sound of the instrument. A lighter neck 1 also facilitates handling of the instrument making the instrument easier to maneuver while playing.

The primary function of the elongated support bars 30 is to strengthen and reinforce the neck by increasing its rigidity. This is advantageous as the neck 1 must be strong enough to withstand use and strong enough to withstand the forces exerted by the tension of the strings. A secondary function of the elongated support bars 30 is to transfer string vibrations from the headstock and the frets to the body of the guitar.

The lateral reinforcing tabs 22 reinforce the fretboard in regions of the fret slots 21, where the material thickness is reduced due to formation of fret slots 21. This allows the construction of the neck 1 to be hollow, without weakening the fretboard 20 too much, or adding unnecessary material to the neck 1.

The combination of the elongated support bars 30 and lateral reinforcing tabs 22 functions as a miniature soundpost under the frets. When the string is stopped on a particular fret, in effect there is a transfer of vibrations from the fret (stopped string) to the body of the neck, and along the elongated support bars 30, which preferably extends to the body of the instrument. This transfer of resonant vibrations from the neck to the body of the instrument, increases the resonant response of the body, which in turn enhances sustain and tonal color of the sound of the instrument.

The neck 1 may also further comprise a dual action trussrod 41, 42 directly below the fretboard 20 as illustrated in embodiments of figures 1A to 3B. The dual action trussrod 41, 42 can be made from steel or titanium, for instance, and is used to create a small amount of longitudinal relief to the surface of the fretboard 20 to counteract the tension of the strings and fine tune the height of the strings above the fretboard 20.

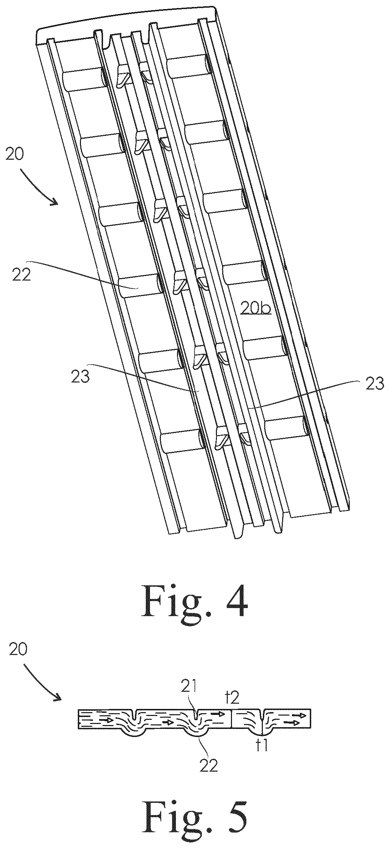

In the embodiments of figures 1A to 3B, as illustrated in figure 5, the lateral reinforcing tabs 22 are formed such that a thickness t1 of the fretboard 20 in regions of the lateral reinforcing tabs 22 is at least the thickness t2 of the fretboard 20 outside of said regions. This dimensioning ensures that the fretboard 20 is not weakened in the regions of the fret slots 21, and thus improves durability of the fretboard 20 and consequently durability of the neck 1.

In the embodiments of figures 1A to 3B, the fretboard 20 comprises the lateral reinforcing tabs 22 on the second side 20b of the fretboard 20 in regions, that are not directly supported by other structures of the neck. In other words, the areas of the fretboard which are in direct contact with the neck body 10 and/or the elongated support bars 30, do not comprise lateral reinforcing tabs 22. This facilitates particularly assembly of the neck 1 by simplifying the joining geometry of the components. This does not significantly weaken the neck 1 as the effective combined material thickness of the neck 1 supports the fretboard in these areas.

In the embodiment of figures 2A to 3B, the elongated support bars 30 are formed as integral parts of the neck body 10 and/or the fretboard 20. This configuration simplifies assembly and construction of the neck 1.

In the embodiment of figures 1A and 1B, the elongated support bars 30 are formed as separate parts from the neck body 10 and the fretboard 20. This enables different materials to be used in the elongated support bars 30, and thus provides improved possibilities for adjusting the properties of the neck 1.

In the embodiment of figures 1A and 1B, the neck body 10 comprises first positioning elements 13 arranged in the longitudinal direction of the neck of the musical instrument 1, the first positioning elements 13 forming a seat for the elongated support bars 30 in the neck body 10. The first positioning elements 13 increase the contact area between the neck body 10 and the elongated support bars 30 thus resulting in improved adhesion when the neck 1 is assembled. The first positioning elements 13 also facilitate positioning of the components making the assembly of the neck 1 easier.

In the embodiment of figures 1A and 1B, the fretboard 20 further comprises second positioning elements 23 on the second side 20b of the fretboard 20 arranged in the longitudinal direction of the fretboard 20, the second positioning elements 23 forming a seat for the support bars 30 in the fretboard 20. The second positioning elements 23 increase the contact area between the fretboard 20 and the elongated support bars 30 thus resulting in improved adhesion when the neck 1 is assembled. The second positioning elements 23 also facilitate positioning of the components making the assembly of the neck 1 easier.

In the embodiment of figures 1A and 1B, the support bars 30 are formed as I-beams.

The components of the neck 1 are preferably cemented together using epoxy cement to form a rigid neck construction.

The material of the fretboard 20 preferably comprises plastic material compound, which comprises thermoplastic polymer and natural fibers, the natural fibers having a length ranging from 0.5 mm to 5 mm. The natural fibers may be wood-based cellulose, hemp fibers, or flax fibers, for instance. This material selection provides a tone similar to high quality musical string instruments made of wood.

Preferably, the natural fibers of the plastic material compound follow the contours of the fretboard 20 in longitudinal direction of the fretboard 20. This orientation allows the sound to travel in the fretboard 20 faster than the sound would travel if the fibers would be oriented differently. This significantly improves the sound quality of the instrument.

The material of the neck body is preferably wood, or the plastic material compound as described above.

The material of the support bars 30 preferably comprises carbon fiber or glass fiber.

Preferably, the musical instrument is a musical string instrument. Particularly, preferably the musical string instrument is an electric guitar, and the neck 1 is a neck for an electric guitar.

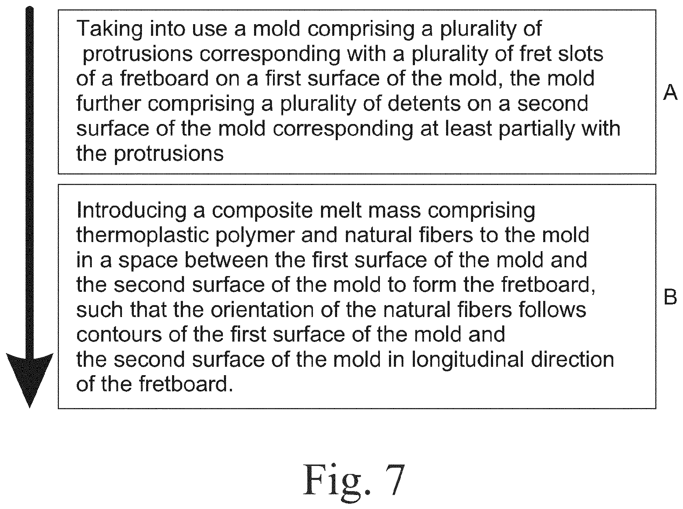

Figure 7 illustrates a flow chart of an embodiment of a manufacturing method for manufacturing a fretboard 20 for a neck 1 of a musical instrument 1. This method may be implemented for manufacturing the fretboards 20 illustrated in Figures 1A to 5, for instance. For instance, an injection molding machine can be used for executing the manufacturing steps.

The method comprising: taking into use in step A a mold 50 comprising a plurality of protrusions 51 corresponding with a plurality of fret slots 21 of a fretboard 20 on a first surface 50 of the mold 50, the mold 50 further comprising a plurality of detents 52 on a second surface 50b of the mold 50 corresponding at least partially with the protrusions 51; and introducing in step B a composite melt mass comprising thermoplastic polymer and natural fibers to the mold 50 in a space between the first surface 50a of the mold 50 and the second surface 50b of the mold 50 to form the fretboard 20, such that the orientation of the natural fibers follows contours of the first surface 50a of the mold 50 and the second surface 50b of the mold 50 in longitudinal direction of the fretboard 20.

The natural fibers following the contours of said surfaces 50a, 50b, improves strength of the fretboard 20, and improves the sound of the fretboard 20. This also allows a fretboard 20 comprising fret slots 21 and lateral reinforcing tabs 22 to be manufactured, such that the natural fibers of the fretboard 20 are intact. In previously known solutions, the fibers are cut in regions of fret slots, which damages the structural integrity and sound of the fretboard 20.

This method also reduces the throughput time of fretboard 20 manufacturing significantly and increases the accuracy of the manufacturing. The method also improves the working conditions of the manufacturers and improves occupational safety of the manufacturing process.

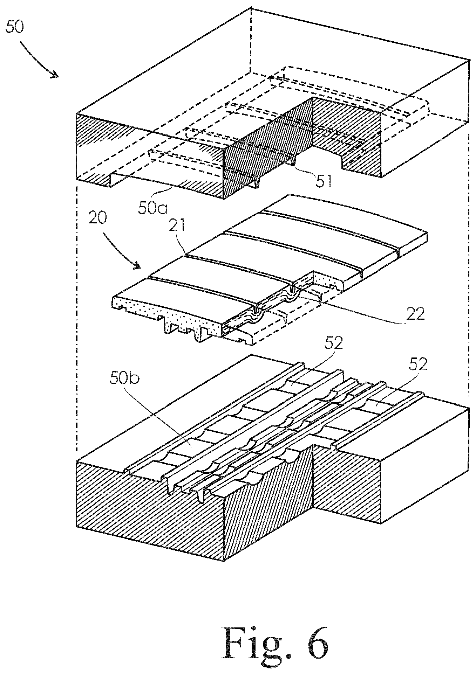

The steps illustrated in the flow chart require a mold 50 for the fretboard 20. An embodiment of the mold 50 is illustrated in figure 6. Once the mold 50 is in position, the mold 50 can be filled with the composite melt mass from one end of the mold 50 to fill the void spaces in the mold 50. Once the mold 50 has been filled, the fretboard 20 is allowed to cure before opening the mold 50 and removing the fretboard 20 from the mold 50.

By injecting the composite melt mass from one end of the mold 50, the fibers of the composite melt mass are aligned in longitudinal direction of the fretboard 20, and the fibers follow the contours of the first surface 50a and the second surface 50b of the mold 50.

Preferably, the second surface 50b of the mold 50 is positioned opposite of the first surface 50a of the mold 50, the second surface 50b and the first surface 50a facing each other.

Preferably, a distance between the first surface 50a of the mold 50 and the second surface of the mold 50 in region of each detent 52 is arranged to be at least as great as a distance between the first surface 50a of the mold 50 and the second surface 50b of the mold 50 outside of said regions. This dimensioning ensures that the properties of the fretboard 20 are as intended, and that the curing of the fretboard 20 is even.

Preferably, the composite melt mass comprises from 20 to 60 weight percent of natural fibers, more preferably from 35 to 55 weight percent of natural fibers. In this range, the flow properties of the composite melt mass are most suitable for manufacturing of the fret board 20.

It is to be understood that the above description and the accompanying figures are only intended to illustrate the present invention. It will be obvious to a person skilled in the art that the invention can be varied and modified without departing from the scope of the invention as defined in the appended claims.

## Claims

1. A neck (1) for a musical instrument, the neck (1) comprising:
a neck body (10),
a fretboard (20) attached to the neck body (10), such that the neck body (10) and the fretboard (20) delimit a space (40), the fretboard (20) comprising a plurality of lateral fret slots (21) on a first side (20a) of the fretboard (20), and
elongated support bars (30) arranged between the neck body (10) and the fretboard (20), the support bars (30) are oriented to run in a longitudinal direction of the neck of the musical instrument (1),
**characterized in that**
the fretboard (20) further comprises:
a plurality of integrally formed lateral reinforcing tabs (22) on a second side (20b) of the fretboard (20) such that the reinforcing tabs (22) are located below the fret slots (21).

2. The neck (1) according to claim 1, wherein the lateral reinforcing tabs (22) are formed such that a thickness (t1) of the fretboard (20) in regions of the lateral reinforcing tabs (22) is at least the thickness (t2) of the fretboard (20) outside of said regions.

3. The neck (1) according to claim 1 or 2, wherein the fretboard (20) comprises the lateral reinforcing tabs (22) on the second side (20b) of the fretboard (20) in regions, that are not directly supported by other structures of the neck.

4. The neck (1) according to any of the preceding claims, wherein the elongated support bars (30) are formed as integral parts of the neck body (10) and/or the fretboard (20).

5. The neck (1) according to any of the preceding claims 1 to 3, wherein the elongated support bars are formed as separate parts from the neck body (10) and the fretboard (20).

6. The neck (1) according to claim 5, wherein the neck body (10) comprises first positioning elements (13) arranged in the longitudinal direction of the neck of the musical instrument (1), the first positioning elements (13) forming a seat for the elongated support bars (30) in the neck body (10).

7. The neck (1) according to any of the preceding claims 5 or 6, wherein the fretboard (20) comprises second positioning elements (23) on the second side (20b) of the fretboard (20) arranged in the longitudinal direction of the fretboard (20), the second positioning elements (23) forming a seat for the support bars (30) in the fretboard (20).

8. The neck (1) according to any of the preceding claims, wherein the support bars (30) are formed as I-beams.

9. The neck (1) according to any of the preceding claims, wherein the support bars (30) comprise carbon fiber or glass fiber.

10. The neck (1) according to any of the preceding claims, wherein the fretboard (20) comprises plastic material compound, which comprises thermoplastic polymer and natural fibers, the natural fibers having a length ranging from 0.5 mm to 5 mm.

11. The neck (1) according to any of the preceding claims, wherein the musical instrument is an electric guitar.

12. A method for manufacturing a fretboard (20) for a neck (1) of a musical instrument, the method comprising:
taking into use (A) a mold (50) comprising a plurality of protrusions (51) corresponding with a plurality of fret slots (21) of a fretboard (20) on a first surface (50a) of the mold (50), the mold (50) further comprising a plurality of detents (52) on a second surface (50b) of the mold (50) corresponding at least partially with the protrusions (51); and
introducing (B) a composite melt mass comprising thermoplastic polymer and natural fibers to the mold (50) in a space between the first surface (50a) of the mold (50) and the second surface (50b) of the mold (50) to form the fretboard (20), such that the orientation of the natural fibers follows contours of the first surface (50a) of the mold (50) and the second surface (50b) of the mold (50) in longitudinal direction of the fretboard (20).

13. The method according to claim 12, wherein
the second surface (50b) of the mold (50) is positioned opposite of the first surface (50a) of the mold (50), the second surface (50b) and the first surface (50a) facing each other.

14. The method according to claims 12 or 13, wherein
a distance between the first surface (50a) of the mold (50) and the second surface of the mold (50) in region of each detent (52) is arranged to be at least as great as a distance between the first surface (50a) of the mold (50) and the second surface (50b) of the mold (50) outside of said regions.

15. The method according to any of the claims 12 to 14, wherein the composite melt mass comprises from 20 to 60 weight percent of natural fibers, more preferably from 35 to 55 weight percent of natural fibers.

## Patentansprüche

1. Hals (1) für ein Musikinstrument (1), wobei der Hals umfasst:
einen Halskörper (10),
ein Griffbrett (20), das an dem Halskörper (10) angebracht ist, derart dass der Halskörper (10) und das Griffbrett (20) einen Raum (40) begrenzen, wobei das Griffbrett (20) eine Vielzahl von seitlichen Bundschlitzen (21) auf einer ersten Seite (20a) des Griffbretts (20) umfasst, und
längliche Stützleisten (30), die zwischen dem Halskörper (10) und dem Griffbrett (20) angeordnet sind, wobei die Stützleisten (30) so ausgerichtet sind, dass sie in einer Längsrichtung des Halses des Musikinstruments (1) verlaufen,
**dadurch gekennzeichnet, dass** das Griffbrett (20) ferner umfasst:
eine Vielzahl von einteilig gebildeten seitlichen Verstärkungslaschen (22) auf einer zweiten Seite (20b) des Griffbretts (20), derart dass die Verstärkungslaschen (22) sich unter den Bundschlitzen (21) befinden.

2. Hals (1) nach Anspruch 1, wobei die seitlichen Verstärkungslaschen (22) derart gebildet sind, dass eine Dicke (t1) des Griffbretts (20) in Regionen der seitlichen Verstärkungslaschen (22) mindestens die Dicke (t2) des Griffbretts (20) außerhalb der Regionen ist.

3. Hals (1) nach Anspruch 1 oder 2, wobei das Griffbrett (20) die seitlichen Verstärkungslaschen (22) auf der zweiten Seite (20b) des Griffbretts (20) in Regionen umfasst, die nicht direkt von anderen Strukturen des Halses gestützt werden.

4. Hals (1) nach einem der vorhergehenden Ansprüche, wobei die länglichen Stützleisten (30) als einteilige Teile des Halskörpers (10) und/oder des Griffbretts (20) gebildet sind.

5. Hals (1) nach einem der vorhergehenden Ansprüche 1 bis 3, wobei die länglichen Stützleisten als von dem Halskörper (10) und dem Griffbrett (20) getrennte Teile gebildet sind.

6. Hals (1) nach Anspruch 5, wobei der Halskörper (10) erste Positionierungselemente (13) umfasst, die in der Längsrichtung des Halses des Musikinstruments (1) angeordnet sind, wobei die ersten Positionierungselemente (13) einen Sitz für die länglichen Stützleisten (30) in dem Halskörper (10) bilden.

7. Hals (1) nach einem der vorhergehenden Ansprüche 5 oder 6, wobei das Griffbrett (20) zweite Positionierungselemente (23) auf der zweiten Seite (20b) des Griffbretts (20) umfasst, die in der Längsrichtung des Griffbretts (20) angeordnet sind, wobei die zweiten Positionierungselemente (23) einen Sitz für die Stützleisten (30) in dem Griffbrett (20) bilden.

8. Hals (1) nach einem der vorhergehenden Ansprüche, wobei die Stützleisten (30) als I-Träger gebildet sind.

9. Hals (1) nach einem der vorhergehenden Ansprüche, wobei die Stützleisten (30) Kohlenstofffaser oder Glasfaser umfassen.

10. Hals (1) nach einem der vorhergehenden Ansprüche, wobei das Griffbrett (20) Kunststoffverbindung umfasst, die thermoplastisches Polymer und natürliche Fasern umfasst, wobei die natürlichen Fasern eine Länge im Bereich zwischen 0,5 mm und 5 mm aufweisen.

11. Hals (1) nach einem der vorhergehenden Ansprüche, wobei das Musikinstrument eine elektrische Gitarre ist.

12. Verfahren zur Herstellung eines Griffbretts (20) für einen Hals (1) eines Musikinstruments, wobei das Verfahren umfasst:
in Betrieb nehmen (A) einer Form (50), die eine Vielzahl von Vorsprüngen (51), die einer Vielzahl von Bundschlitzen (21) eines Griffbretts (20) entsprechen, auf einer ersten Oberfläche (50a) der Form (50) umfasst, wobei die Form (50) ferner eine Vielzahl von Rastungen (52) auf einer zweiten Oberfläche (50b) der Form (50) umfasst, die der Vielzahl von Vorsprüngen (51) entsprechen; und
Einführen (B) einer Verbundschmelze, die thermoplastisches Polymer und natürliche Fasern umfasst, in die Form (50) in einem Raum zwischen der ersten Oberfläche (50a) der Form (50) und der zweiten Oberfläche (50b) der Form (50) zum Bilden des Griffbretts (20), derart dass die Ausrichtung der natürlichen Fasern Umrissen der ersten Oberfläche (50a) der Form (50) und der zweiten Oberfläche (50b) der Form (50) in Längsrichtung des Griffbretts (20) folgt.

13. Verfahren nach Anspruch 12, wobei
die zweite Oberfläche (50b) der Form (50) gegenüber der ersten Oberfläche (50a) der Form (50) positioniert wird, wobei die zweite Oberfläche (50b) und die erste Oberfläche (50a) einander zugewandt sind.

14. Verfahren nach Anspruch 12 oder 13, wobei
ein Abstand zwischen der ersten Oberfläche (50a) der Form (50) und der zweiten Oberfläche der Form (50) in einer Region jeder Rastung (52) eingerichtet ist, um mindestens so groß zu sein wie ein Abstand zwischen der ersten Oberfläche (50a) der Form (50) und der zweiten Oberfläche (50b) der Form (50) außerhalb der Regionen.

15. Verfahren nach einem der Ansprüche 12 bis 14, wobei die Verbundschmelze zwischen 20 und 60 Gewichtsprozent natürliche Fasern, bevorzugter zwischen 35 und 55 Gewichtsprozent natürliche Fasern, umfasst.

## Revendications

1. Manche (1) pour un instrument de musique, le manche (1) comprenant :
un corps de manche (10),
une touche (20) fixée au corps de manche (10), de sorte que le corps de manche (10) et la touche (20) délimitent un espace (40), la touche (20) comprenant une pluralité de fentes de frette latérales (21) sur un premier côté (20a) de la touche (20), et
des barres de support allongées (30) agencées entre le corps de manche (10) et la touche (20), les barres de support (30) sont orientées pour s'étendre dans une direction longitudinale du manche de l'instrument de musique (1),
**caractérisé en ce que** la touche (20) comprend en outre :
une pluralité de languettes de renforcement latérales (22) formées de manière solidaire sur un second côté (20b) de la touche (20), de sorte que les languettes de renforcement (22) sont situées au-dessous des fentes de frette (21).

2. Manche (1) selon la revendication 1, dans lequel les languettes de renforcement latérales (22) sont formées de sorte qu'une épaisseur (t1) de la touche (20) dans les régions des languettes de renforcement latérales (22) représente au moins l'épaisseur (t2) de la touche (20) à l'extérieur desdites régions.

3. Manche (1) selon la revendication 1 ou 2, dans lequel la touche (20) comprend les languettes de renforcement latérales (22) sur le second côté (20b) de la touche (20) dans les régions, qui ne sont pas directement supportées par les autres structures du manche.

4. Manche (1) selon l'une quelconque des revendications précédentes, dans lequel les barres de support allongées (30) sont formées comme des parties solidaires du corps de manche (10) et/ou de la touche (20).

5. Manche (1) selon l'une quelconque des revendications 1 à 3, dans lequel les barres de support allongées sont formées comme des parties séparées du corps de manche (10) et de la touche (20).

6. Manche (1) selon la revendication 5, dans lequel le corps de manche (10) comprend des premiers éléments de positionnement (13) agencés dans la direction longitudinale du manche de l'instrument de musique (1), les premiers éléments de positionnement (13) formant un siège pour les barres de support allongées (30) dans le corps de manche (10).

7. Manche (1) selon l'une quelconque des revendications 5 ou 6, dans lequel la touche (20) comprend des seconds éléments de positionnement (23) sur le second côté (20b) de la touche (20), agencés dans la direction longitudinale de la touche (20), les seconds éléments de positionnement (23) formant un siège pour les barres de support (30) dans la touche (20).

8. Manche (1) selon l'une quelconque des revendications précédentes, dans lequel les barres de support (30) sont formées comme des poutres en I.

9. Manche (1) selon l'une quelconque des revendications précédentes, dans lequel les barres de support (30) comprennent de la fibre de carbone ou de la fibre de verre.

10. Manche (1) selon l'une quelconque des revendications précédentes, dans lequel la touche (20) comprend un composé de matière plastique, qui comprend du polymère thermoplastique et des fibres naturelles, les fibres naturelles ayant une longueur allant de 0,5 mm à 5 mm.

11. Manche (1) selon l'une quelconque des revendications précédentes, dans lequel l'instrument de musique est une guitare électrique.

12. Procédé pour fabriquer une touche (20) pour un manche (1) d'un instrument de musique, le procédé comprenant les étapes consistant à :
exploiter (A) un moule (50) comprenant une pluralité de saillies (51) correspondant à une pluralité de fentes de frette (21) d'une touche (20) sur une première surface (50a) du moule (50), le moule (50) comprenant en outre une pluralité de détentes (52) sur une seconde surface (50b) du moule (50) correspondant au moins partiellement aux saillies (51) ; et
introduire (B) une masse fondue composite comprenant un polymère thermoplastique et des fibres naturelles, dans le moule (50) dans un espace entre la première surface (50a) du moule (50) et la seconde surface (50b) du moule (50) afin de former la touche (20), de sorte que l'orientation des fibres naturelles suit les contours de la première surface (50a) du moule (50) et la seconde surface (50b) du moule (50) dans la direction longitudinale de la touche (20).

13. Procédé selon la revendication 12, dans lequel :
la seconde surface (50b) du moule (50) est positionnée à l'opposé de la première surface (50a) du moule (50), la seconde surface (50b) et la première surface (50a) se faisant face.

14. Procédé selon les revendications 12 ou 13, dans lequel :
une distance entre la première surface (50a) du moule (50) et la seconde surface du moule (50) dans la région de chaque détente (52) est agencée pour être au moins aussi importante qu'une distance entre la première surface (50a) du moule (50) et la seconde surface (50b) du moule (50) à l'extérieur desdites régions.

15. Procédé selon l'une quelconque des revendications 12 à 14, dans lequel la masse fondue composite comprend de 20 à 60 pour cent en poids de fibres naturelles, encore de préférence de 35 à 55 pour cent en poids de fibres naturelles.
